# EUROPEAN PATENT SPECIFICATION

(11) **EP 0 992 314 B1**
(45) Date of publication and mention of the grant of the patent: **15.11.2006**
(21) Application number: 99307638.9
(22) Date of filing: 28.09.1999
(51) Int. Cl.: B23K 20/12

(54) **Friction stir welding and welded structures produced thereby**
Drehendes Reibungschweissen und so hergestellte Schweissstrukturen
Soudage par friction à mouvement cyclique et structures soudées ainsi obtenues

(30) Priority: 29.09.1998 JP 27461898
(43) Date of publication of application: 12.04.2000
(73) Proprietor: Hitachi, Ltd., Chiyoda-ku, Tokyo 100-8010 (JP)
(72) Inventor: Satou, Akihiro, Hitachi-shi, Ibaraki 316-0006 (JP); Ezumi, Masakuni, Kudamatsu-shi, Yamaguchi 744-0002 (JP); Fukuyori, Kazusige, Kudamatsu-shi, Yamaguchi 744-0031 (JP)
(74) Representative: Paget, Hugh Charles Edward

(56) References cited:
- EP-A- 0 797 043
- PATENT ABSTRACTS OF JAPAN vol. 1998, no. 12, 31 October 1998 (1998-10-31) & JP 10 193143 A (SHOWA ALUM CORP), 28 July 1998 (1998-07-28)

## Description

### Background of the Invention:

The present invention relates to a friction stir welding method used, for example, for aluminium alloy material frame members etc., and in particularly to a friction stir welding method used, for example, in a case where the height position of portions subjected to the welding of two abutted frame members made of aluminium alloy materials differs. The invention also relates to structures produced by means of friction stir welding.

Document JP-A-10193143 discloses in combination of the features of the preamble of claims 1 and 13

As shown in EP-A-797043, friction stir welding is a method in which by rotating a round rod (called a rotary tool) inserted into a welding portion of two abutted members and moving the rotary tool along a welding line, the welding portion of the two members is thermoplastically heated and is plastically fluidized and thereby welded.

The rotary tool comprises a small diameter portion for inserting to the welding portion and a large diameter portion which is positioned at an end of the small diameter portion. The small and large diameter portions of the rotary tool are positioned on the same axis and are rotated together. Friction stir welding is applied to an abutting portion and an overlapping portion of the two frame members which are made of aluminum alloy materials, for example.

Further, the welding portion of one or both frame members to be subjected to the welding may have a raised portion or upward projection which protrudes towards the large diameter portion of the rotary tool. This raised portion of the frame member is provided integrally at an end of a cross member of a hollow extruded frame member. The raised portion provides material for burying a gap which is formed between the two frame members. When a face of frame member forms an outer face of a product, for example, an outer side of a car body of a railway vehicle, any residue of the raised portion of the frame member is cut off after the welding.

When the raised portion is provided on an extruded frame member, the raised portion can extend in the extrusion direction. However, the raised portion of the frame member cannot be provided at an end portion of the extruded member; in other words, the raised portion of the frame member cannot be provided perpendicular to the extrusion direction.

As a result, when two extruded frame members are arranged orthogonally each other and end portions of the extruded frame members are to be welded by the friction stir welding method, at an end portion of one extruded frame member the integral raised portion is present, but on the other extruded frame member no raised portion is present.

Accordingly, it is considered that satisfactory welding of the two extruded frame members cannot be carried out, because one of the frame members does not have the raised portion at the welding zone.

The above described case is one example in which the height positions of the surfaces at the width direction of the two extruded frame members of the welding portion differ each other; in other words the height position of the surface at the width direction of the one frame member differs from the height position of the surface at the width direction of the other frame member or the height position of the surface at the width direction of the one frame member is higher or lower than the height position of the surface at the width direction of the other frame member.

### Summary of the Invention:

An object of the present invention is to provide to a friction stir welding wherein good welding can be obtained even when the height positions of the surfaces of the two members of the welding portion differ

According to the invention there is provided a friction stir welding method as set out in claim 1, and a structure as set out in claim 13.

Further, the expression "the height positions of the surfaces of the two members of the welding portion differ" indicates that the surface side, for example, of the members has an upper portion and a lower portion, with respect to the rotary tool which is a reference for determination of position; it means that the distance from the rotary tool to the surface of the welding portion differs, for example. The expression "the member being the low side" refers to the member which has the larger distance from the rotary tool.

The padding welding, or pad welding, is carried out along at least part or parts of the friction stir weld line in order to raise the surface of the low side member towards the level of the surface of the high side member, thereby at least partially to remove the height difference where the pad or pads are formed. The pad welding may be continuous or intermittent along the friction stir welding line.

### Brief Description of Drawings

Embodiments of the invention will now be described by way of example, with reference to the drawings.
Fig. 1 is a longitudinal cross-sectional view of a welding portion of two frame members of a friction stir welding of one embodiment according to the present invention and is a cross-sectional view on line I-I of Fig. 6;
Fig. 2 is a perspective view of a part of a welding portion of the two frame members of Fig. 1;
Fig. 3 is a cross-sectional view on line III-III in Fig. 1 of a rib of the frame member of Fig. 1;
Fig. 4 is a longitudinal cross-sectional view on line IV-IV in Fig. 6 of a welding portion of another two frame members welded in this embodiment according to the present invention;
Fig. 5 shows the condition after the friction stir welding has carried out on the two frame members of Fig. 4;
Fig. 6 is a side view of a car body of a railway vehicle on which the friction stir welding is carried out according to the present invention;
Fig. 7 is a side view of another car body of another railway vehicle on which friction stir welding is carried out according to the present invention;
Fig. 8 is a cross-sectional view on line VIII-VIII of Fig. 7 of the two frame members of Fig. 7; and
Fig. 9 is a cross-sectional view showing a car body of a further railway vehicle on which the friction stir welding is carried out according to the present invention and corresponds to the embodiment shown in Fig. 8.

### Description of the Embodiments:

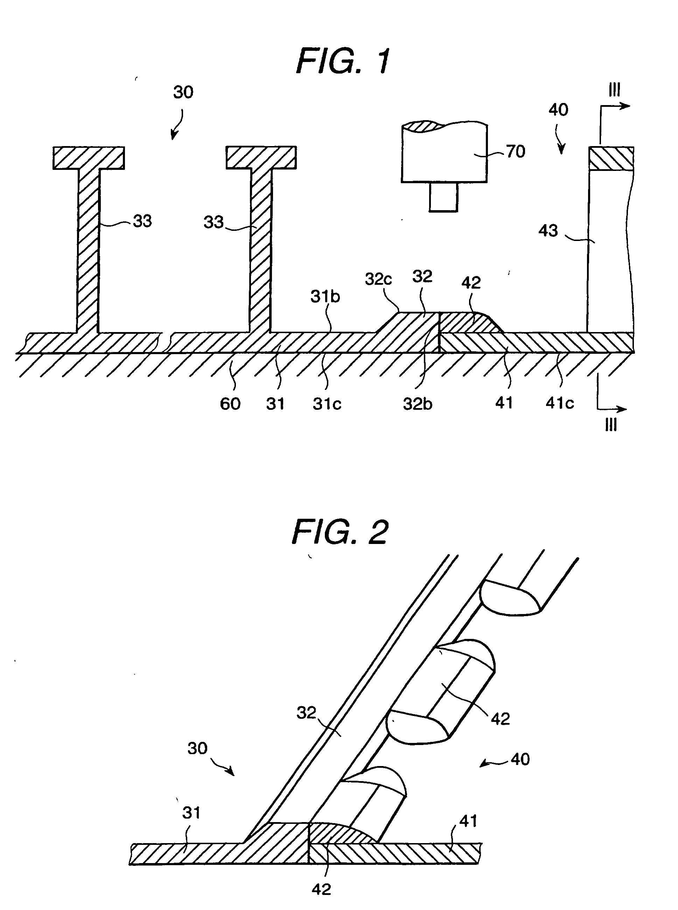

A friction stir welding method of one embodiment of the present invention will be described with its application to a car body of a railway vehicle, referring to Figs. 1 to 6.

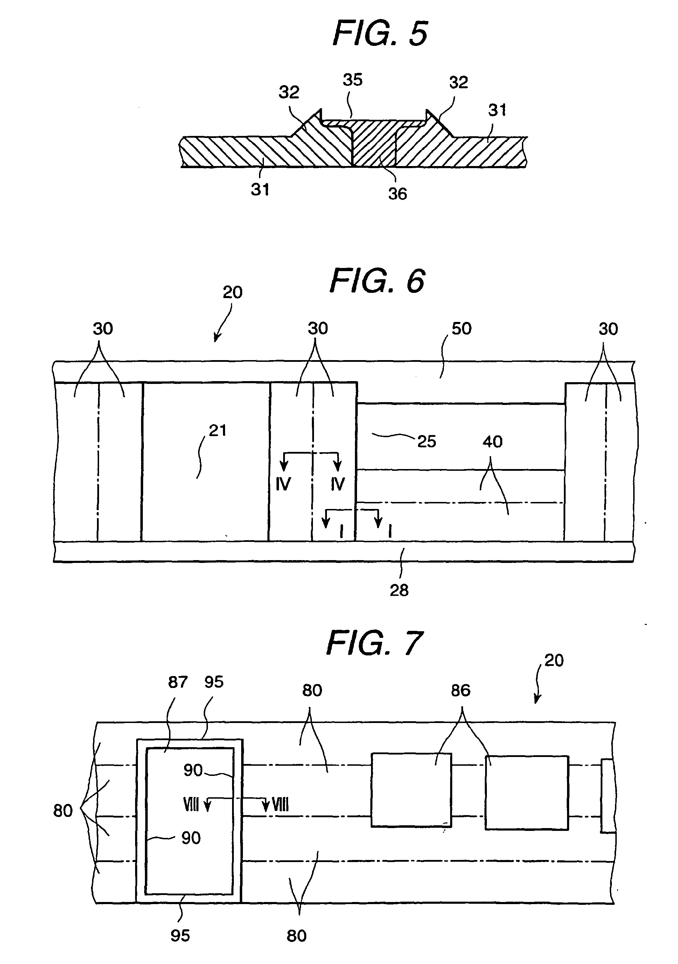

In Fig. 6, a portion of the side structure 20 of the body of the railway vehicle is shown constituted by combining plural aluminium alloy extruded frame members 30, 40 and 50. The extrusion direction of the frame members 30, which are arranged between an entry and exit port or door region 21 and a window 25 and between adjacent windows 25, is perpendicular to the longitudinal direction of the body in Fig. 6. The extrusion direction of the extruded frame members 40 below the window 25 is in the longitudinal direction in Fig. 6. In other words, the respective extrusion directions of the extruded frame members 30 and extruded frame members 40 are orthogonal.

The extrusion direction of the extruded frame member 50 arranged above the port 21 is in the longitudinal direction of the body in Fig. 6. Reference numeral 28 indicates a bottom frame of the car body. All these members are welded together by friction stir welding and by conventional MIG welding.

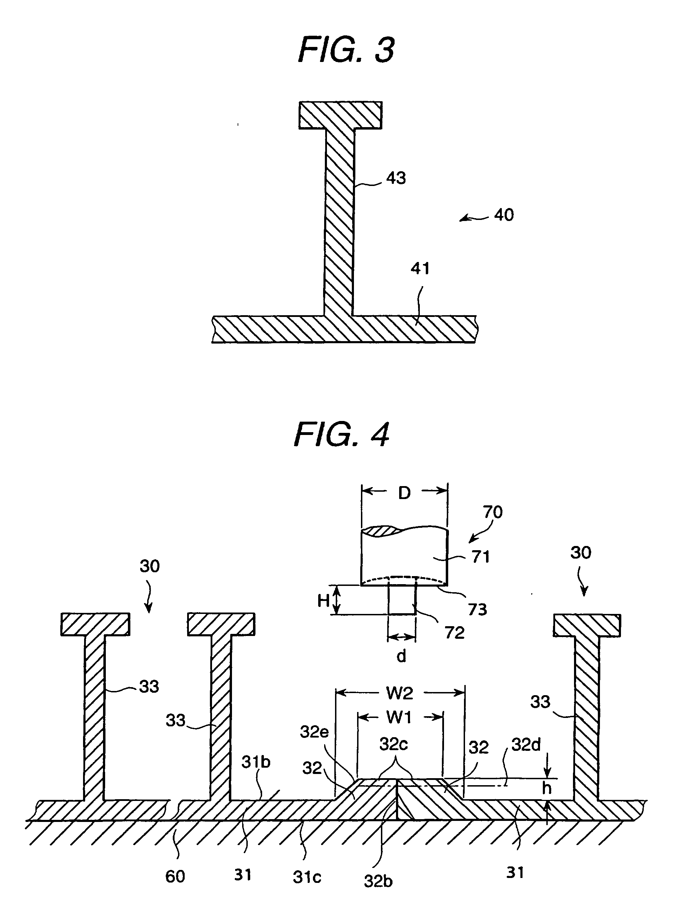

Referring to Figs. 4 and 5, the friction stir welding of two of the extruded frame members 30 to each other, whose extrusion directions are the same, will be explained. The friction stir welding of the adjacent extruded frame members 40 to each other is carried out similarly.

The extruded frame member 30 (and also each of the frame members 40 and 50) has a flat plate 31 at the exterior of the car body and ribs 33 perpendicular to the plate 31 at the inside of the car body. The ribs 33 extend in the extrusion direction of the extruded frame member 30.

At the end portion, where the frame members 30 abut each other, in the width direction (the direction orthogonal to the extrusion direction) the extruded frame member 30 has a thickening constituted by an upward projection or raised portion 32 at the car body inside. The protrusion height of the raised portion 32 of the frame member 30 is shown as h. The end face 32b of the plate 31 and the raised portion 32 is substantially orthogonal to the outer face of the plate 31 of the frame member 30 and to the top face 32c of the raised portion 32. Accordingly, when the two extruded frame members 30 are abutted, the end faces 32b of the end portions of the plates 31 of the two frame members 30 contact each other. However, this is an ideal case. The abutted portion may be said to have a I shape groove form structure.

When the friction stir welding is carried out on the two frame members 30, in order not to make a gap between the two frame members 30 (or to make a gap having a predetermined size), the frame members 30 are restrained on a stand 60, with the raised portion 32 of the plate 31 directed upwardly and the plate 31 lying on the stand 60. Thus the welding portion at the edges of the extruded frame members 30 contacts and is supported by the stand 60. The stand 60 is made of steel.

A rotary tool 70 for carrying out the friction stir welding of the two frame members 30 is inserted into the welding portion from above. The rotary tool 70 has a large diameter portion 71 and a small diameter portion 72 as a tip end (lower end) of the large diameter portion 71.

A boundary 73 (an axially end portion of the large diameter portion 71) between the large diameter portion 71 and the small diameter portion 72 of the rotary tool 70 has a curved shape and is recessed towards the large diameter portion 71. The small diameter portion has a screw structure. During the friction stir welding, the boundary 73 is positioned in the raised portion 32 of the frame member 30. In other words, the boundary 73 is positioned at an intermediate level between the level of the top face 32c of the raised portion 32 and the level of the face 31b at the inner side of the plate 31 of the frame member 30 (i.e. the general inner face of the plate 31).

The friction stir welding is carried out by rotating the rotary tool 70 and inserting it into the welding portion of the two frame members 30 and further rotating and moving the rotary tool 70 along the welding line of the two frame members 30. The axis center line of the rotary tool 70 is positioned at the end faces 32b of the frame members 30.

Further, the axis of the rotary tool 70 at the large diameter portion 71 is inclined rearwardly with respect to the moving direction of the rotary tool 70. Accordingly, the front end of the large diameter portion 71 is positioned outwardly (in Fig. 4, above the top face 32c) from the top face 32c of the raised portion 32 of the frame member 30.

The rear end of the large diameter portion 71 of the rotary tool 70 in its movement direction is positioned in the raised portion 32 (e.g. at the level of a line 32d). In other words, the rear end of the large diameter portion 71 is positioned between the top face 32c of the raised portion 32 and an extension line of the face 31b of the plate 31 of the frame member 30. The above stated "front" and "rear" are defined with reference to the moving direction of the rotary tool 70.

The relationships between the sizes of the respective parts will be explained. The width W1 of the top faces 32c of the raised portions 32 of the frame members 30 when the two raised portions 32 are abutted is larger than the diameter d of the small diameter portion 72 of the rotary tool 70 but is smaller than the diameter D of the large diameter portion 71. The width W1 of the top faces 32c may be larger than the diameter D of the large diameter portion 71. The width W2 of the base portion of the two raised portions 32 is larger than the diameter of the large diameter portion 71. The top face 32c of the raised portion 32 and the face 31b of the plate 31 are connected by a sloping face 32e.

The height H of the small diameter portion 72 is such that, when the boundary 73 at the rear end of this portion 72 is positioned in the raised portions 32, the tip end of the small diameter portion 72 is close to the stand 60. For example, the distance between the outer face 31c of the plate 31 and the tip end of the small diameter portion 72 is 0.1 mm. In other words, the location of the tip end of the small diameter portion 72 is chosen to avoid its contact with the stand 60.

With the two extruded frame members 30 fixed to the stand 60, the friction stir welding is carried out. The apparatus for rotating the rotary tool 70 has rollers which move with the travel movement of the rotary tool 70. These rollers are arranged on both sides of and in front of and behind the rotary tool 70 in its movement direction, and, when the rotary tool 70 is inserted into the two frame members 30, contact the faces 31b of the two frame members 30 to press the two frame members 30 towards the stand 60.

Fig. 5 shows the state or condition of the two frame members 30 after the friction stir welding. The material of the raised portions 32 in which the large diameter portion 71 has been inserted is supplied to a gap between the abutted two extruded frame members 30 and is filled out to the outer face of the two frame members 30 as a facet. Some of the material remains as a pair of fins. Accordingly, a central portion of the two raised portions 32 forms a recessed portion 35. The gap between two frame members 30 is buried by the material which is softened by the rotation of the rotary tool 70. For example, the material of the raised portions 32 is moved into the gap and the gap is buried by this material of the raised portion 32.

By the tip end of the small diameter portion 72 of the rotary tool 70 softened material is moved into the lower portion of the gap, and then the gap is filled or buried by this softened material. As a result at the outer faces 31c of the frame members 30 the gap is filled substantially to the level of these outer faces 31c. A reference numeral 36 indicates a welding bead which is formed by this method.

Since the welding portion at the outer faces 31c is formed substantially to the level of the outer faces 31c, the thickness of the putty during the welding can be made thin. Further, since there is no raised portion of the bead 36 at the outer faces 31c, the outer face of the car body can be finished, e.g. by hair line processing, and needs no coating.

Pairs of the extruded frame members 40 are welded together in the same manner as the members 30. Next, an assembly of the welded extruded frame members 30 and an assembly of two extruded frame members 40 are mounted and fixed on the stand 60 as shown in Fig. 6 and Fig. 1. In advance, the ribs 43 are cut off at the vicinity of the abutted region which becomes the welding portion. This portion of the frame member 40 is made smooth, so that during the welding stir welding, the vicinity of the friction stir welding region is pressed by the rollers described above.

Next, as shown in Figs. 1 and 2, at the abutting portions (the welding portions) of the two assemblies, padding welding is carried out at the end portions of the two extruded frame members 40. It is desirable that the height and width of padding welding pads 42 correspond to the height and width of the raised portion 32 of the frame member 30. It is desirable to carry out this padding welding continuously along the friction stir welding line but it can be carried out intermittently. The pads 42 of the padding welding may be either formed wholly of welding material or be pads of material fixed in place by welding material.

For example, as indicated in Fig. 2 the padding welding is carried out for about 1 cm and is omitted for about 1 cm, repeatedly. This padding welding material has a strength such that during the friction stir welding the material does not fly out due to the rotation of the rotary tool 70. It is permissible that due to the large diameter portion 71 of the rotary tool 70 the material is piled up as fins so that the recessed portion 35 is formed.

Next, as described above with reference to Fig. 4, friction stir welding is carried out on the frame members 30 and the frame members 40. By the friction stir welding, a welding bead is formed substantially to the level of the outer faces 31c and 41c of the plates 31 and 41, similarly as is shown in Fig. 5.

If no padding welding portions 42 are made, since the large diameter portion 71 and the small large diameter portion 72 of the rotary tool 70 are not well inserted into abutment zone of the frame member 30 and the member 40, the material of the raised portion 32 flies out as the fins and the filling of the material into the gap is not well achieved. As a result good welding can be not carried out on the extruded frame members 30 and 40.

However, in this embodiment according to the present invention, since the padding welding portions 42 serve the function of the raised portion 32 of the frame member 30, good welding of the frame members 30 and 40 can be carried out.

The padding welding portions 42 are formed intermittently in this embodiment, but during the friction stir welding material movement is carried out from the raised portion 32 of the frame member 30 to the side of the frame member 40.

Further, with the rotation and the movement of the rotary tool 70, the materials of the raised portion 32 and the padding welding portions 42 are moved towards the rear side of the rotary tool 70. In this way good welding where no padding welding portion 42 exists can be substantially achieved.

The welding portion in this case becomes substantially as shown in Fig. 5. The raised portion 32 of the extruded frame member 30 is the same as in Fig. 4, and the portions which correspond to the raised portion of the extruded frame member 40 is formed by the padding welding.

When the outer face of the body is finished without painting, the padding welding may be carried out by the TIG welding method. The filler material is the same material as that of the frame members 30 and 40. For example, by cutting the frame members 30 and 40, the filler material is provided. For example, the end materials of the frame members 30 and 40 are used for the filler material. With this method, since there is no change of colour at the welding portion, a good appearance can be obtained. When the filler material is another material, a change of colour appears at the welding portion and a good appearance cannot be obtained.

In this embodiment according to the present invention, before or after the padding welding the frame members may be installed on the stand 60.

In this embodiment of the present invention, extruded frame members are welded to each other for constituting the side structure body, but the invention can be applied to other members.

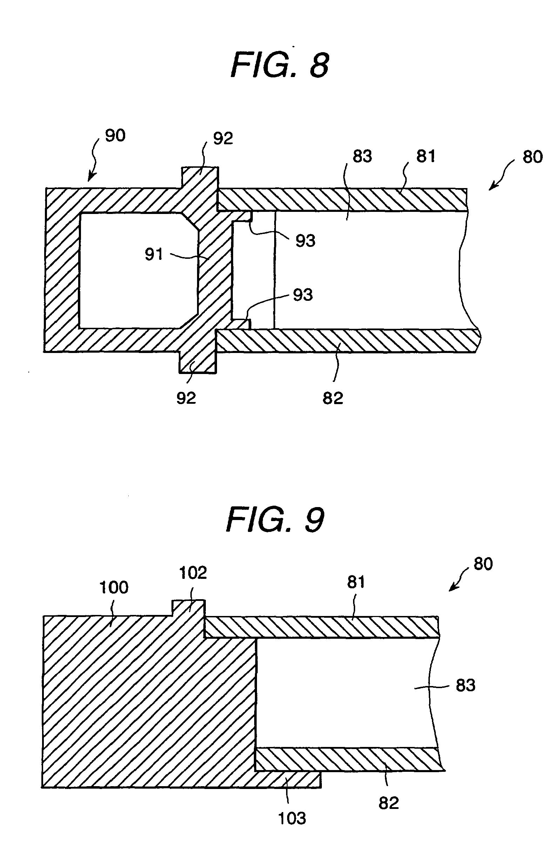

Another embodiment according to the present invention shown in Figs. 7 and 8 will now be explained. Extruded frame members 80 are arranged with their longitudinal direction in the longitudinal direction of a car body. Each extruded frame member 80 is a hollow shape frame member made of an aluminium alloy material. A raised portion is formed at both faces of the edges in the width direction of the extruded frame member 80.

The welding of the frame members 80 to each other is carried out by friction stir welding by utilizing the raised portions, as described above. Fig. 7 shows windows 86 and an entry and exit port 87.

Extruded frame members 90,95 constitute a frame of the entry and exit port 87. The frame members 90 are the vertical sides of the frame and the frame members 95 are the upper and lower sides of the frame.

The frame members 90,95 are welded to each other by a suitable welding method. The frame members 90,95 and the frame members 80 are welded together by the friction stir welding method. The frame member 90 is a hollow shape frame member made of an aluminum alloy material (see Fig. 8). Raised portions 92 are provided at both welding portions of the frame member 90. Further, projecting flanges or lips 93 which project towards the frame member 80 are provided. The projecting lips 93 are inserted adjacent the inner sides of the two plates 81,82 of the frame member 80. In the frame member 80, the inner cross rib 83 is cut off to allow insertion of the projecting lips 93. As Fig. 8 shows, the abutting faces of the raised portion 92 and the frame member 80 are located in a region which is a projection of the thickness of the cross-web 91 of the frame member 90.

The construction of the frame member 95 is the same to the construction of the frame member 90. The two plates 81 and 82 are substantially parallel.

After the frame members 80 have been joined by friction stir welding, the frame members 90 and 95 are arranged. The frame members 80, 80, 90 and 95 (excluding the raised portion 92) are mounted on the stand 60. Along the frame members 90 and 95, padding welding is carried out to end portions of the frame members 80 to provide pads 42 in a similar manner as shown in Fig. 2, alongside each raised portion 92. After that the friction stir welding is carried out.

The friction stir welding is carried out successively at each side or is carried out simultaneously to both sides. After the friction stir welding, residue of the raised portion and the padding welding portion at the car body outer side of the railway vehicle is cut off and then the car body outer side of the railway vehicle is made smooth.

The above stated embodiment according to the present invention can be applied to a case in which the frame of the window is installed according to the friction stir welding. Further, in the above stated embodiment the hollow shape frame member is adopted, but also the frame member shown in Fig. 1 can be used.

The present invention can be applied when members having a different thickness at their ends due to a manufacture error, are abutted. When the heights of the surfaces at the welding portion differ, padding welding is carried out on the lower member and then the friction stir welding can be carried out.

A further embodiment shown in Fig. 9 will now be explained. The structure shown in Fig. 9 corresponds considerably to that of Fig. 8. The rib 83 of the end portion of the hollow frame member 80 and the end portion of the plate 82 of the inner side of the car body are cut off and removed. An end portion of an outer side of car body of an extruded frame member 100 is abutted to the plate 81. At this end portion of the extruded frame member 100 a raised portion 102 is provided and this raised portion 102 projects towards the outer side of the car body.

The outer face of the extruded frame member 100, other than the raised portion 102 and the outer face of the plate 81 are at substantially the same level. A projection lip 103 of a face at the inner side of the car body of the extruded frame member 100 overlaps the plate 82 at the inner side of the car body of the extruded frame member 80. The extruded frame member 100 is not a hollow shape frame member, for strength reasons. This extruded frame member 100 is a solid frame member.

With the solid extruded frame member 100 is mounted on the stand 60, friction stir welding is carried out on the abutted portion between the plate 81 and the extruded frame member 100 from above. The friction stir welding manner is carried out in accordance with the invention using the raised portion 102 and padding welding. Next the above stated structure body is reversed and then the projection lip 103 and the plate 82 welded by fillet welding using the arc welding manner. If the projection lip 103 is absent, the abutted portion between the plate 82 and the extruded frame member 100 is joined by welding .

With the present invention, in summary, where the height position of the surfaces of the two members at the welding portion of the two members differs, excellent welding of the two members can be obtained.

## Claims

1. A friction stir welding method comprising the step of:
(i) abutting end portions of first and second members (30, 40) along a welding line at which the height positions of two adjacent surfaces of the respective end portions of the two members differ;
**characterised by** the steps of
(ii) carrying out padding welding to the lower surface of the abutted member surfaces in order to raise the height of the member having the lower surface towards the height position of the other surface; and
(iii) performing friction stir welding of the abutted members at the welding line from the side of the two surfaces on which the padding welding was performed.

2. The friction stir welding method according to claim 1, wherein the padding welding is carried out at spaced locations along the direction of friction stir welding.

3. The friction stir welding method according to claim 1 or 2, wherein step (i) of abutting is between the end portion of the first member (30) having a first thickness and an end portion of the second member (40), whose end portion is thinner than said first thickness, and wherein said friction stir welding is performed on said abutted end portions from the side at which said padding welding was performed.

4. The friction stir welding method according to claim 3, wherein both said members (30, 40) are extruded members, and in their welded position the extrusion direction of the first member is perpendicular to that of the second member.

5. The friction stir welding method according to claim 1, carried out in a method of manufacturing a side structure (20) of a car body, wherein
in step (i) said first and second members are two sub-assemblies of extruded members (30, 40) produced by a step (a) of friction stir welding of a plurality of the extruded members in each case;
in step (i) said abutting is between welding portions of said two sub-assemblies such that the respective extrusion directions of the extruded members of the two sub-assemblies are substantially orthogonal, a first one of the sub-assemblies having a raised portion (32) along its said welding portion at a side edge of one said extruded member (30);
said padding welding of step (ii) is carried out, before or after said abutting, to the welding portion of the second sub-assembly; and
said friction stir welding of step (iii) joins said sub-assemblies from the side at which said padding welding was performed.

6. The friction stir welding method according to claim 5, wherein said padding welding is carried out by TIG welding using as a filler material the same material as the material of at least one of the sub-assemblies at the welding portion thereof.

7. The friction stir welding method according to claim 1, carried out in a method of manufacturing a side structure (20) of a car body, wherein
in step (i) said first member is a sub-assembly of extruded members (80) produced by friction stir welding of a plurality of extruded members (80), and said second member is a frame structure (90), which is a frame of an entry/exit port or a frame of a window, the edge portion of said frame structure having a raised portion (92) along said edge portion thereof;
in step (i) said abutting is between edge portions of respectively said sub-assembly and said frame structure (90);
said padding welding of step (ii) is carried out, before or after said abutting, to said sub-assembly along said edge portion thereof; and
said friction stir welding of step (iii) joins said sub-assembly and said frame structure (90) from the side at which said padding welding was performed.

8. The friction stir welding method according to claim 6, wherein said raised portion is on the inner side of the car body and said padding welding and said friction stir welding of at least one of steps (iii) and (a) are carried out from the inner side of said car body.

9. The friction stir welding method according to claim 1, wherein said first member is an extruded hollow frame member (80), and said second member is an extruded frame member (90), the method comprising an additional step (0), carried out before step (i), of partially removing a cross rib (83) extending between opposed plates (81, 82) at an end portion in the extrusion direction of the extruded hollow frame member (80), wherein
in step (i) said abutting is between said extruded frame member (90) and said end portion of said extruded hollow frame member (80) with the respective extrusion directions of said extruded hollow frame member (80) and said extruded frame member (90) orthogonal and said extruded frame member (90) inserted between said opposed plates (81, 82), and
said friction stir welding of step (iii) is performed at the abutted portion of said extruded frame member (90) from outside said extruded frame member (90).

10. The friction stir welding method according to claim 9, wherein
an end portion of said abutted portion of said extruded frame member (90) has a raised portion (92) which projects outwardly from the thickness of said extruded frame member (90), and
said friction stir welding of step (iii) is carried out on said abutted portion including said raised portion (92).

11. The friction stir welding method according to claim 1, wherein said first member is an extruded hollow frame member (80), and said second member is an extruded frame member (100), the method comprising the step (0) of partially removing a cross rib (83) extending between opposed plates (81, 82) at an end portion in the extrusion direction of the extruded hollow frame member (80) and removing an end portion of a first one of said plates (82); wherein
said step (i) of abutting is between said second member (100) and said end portion of said first member (80) and includes the intermediate steps of:
(i.a) overlapping and abutting an end portion of the second plate (81) of said first member to said second member; and
(i.b) overlapping and abutting said first plate (82) to said second member (100),
the extrusion directions of said first and second members (80, 100) being substantially orthogonal;
said adjacent surfaces are an outer face of the second plate (81) of the first member and an outer face of the second member (100), and
said friction stir welding of step (iii) is performed on the portion of said second member (100) abutting said second plate (81) of said first member (80) from outside said first member (80).

12. The friction stir welding method according to claim 11, wherein
an end portion of said portion of said second member (100) abutting said second plate (81) of said first member (80) has a raised portion (102) which projects to the outside, and
said friction stir welding of step (iii) is carried out on said portion of said second member (100) abutting said second plate (81) of said first member (80), including said raised portion (102).

13. A structure in which:
an end portion of a first member (30) and an end portion of a second member (40), which are abutted together so that the height positions of the two adjacent surfaces of the respective end portions of the two members differ, are joined by friction stir welding along a welding line;
at the welding line, a welding portion protrudes in the thickness direction of the members (30, 40) and a central portion in the width direction of said welding portion is recessed;
**characterised in that**
said protruding welding portion comprising material of said first member (30) and padding welding material which was padding welded to the first surface of the second member thereby raising the surface of said second member (40) to allow friction stir welding along the welding line.

14. The structure according to claim 13, wherein
said first member (30) and said second member (40) are extruded frame members; and
said end portion of said second member (40) is an end portion in the extrusion direction of the second member (40).

15. A car body having a structure according to claim 13, wherein the first member (30) is a first extruded member and the second member (40) is a second extruded member, the extrusion directions of the first and second extruded members (30, 40) being substantially orthogonal, and said protruding welding portion is at the inner side of the car body.

16. The car body according to claim 15, wherein
each of said first and second extruded members comprises a plurality of extruded bodies welded together with their extrusion directions aligned; and
said first and second extruded members are in a side structure of said car body.

17. The car body according to claim 16, wherein
said first member is a frame (90) of an entry/exit port or a frame of a window.

## Patentansprüche

1. Reibrührschweißverfahren umfassend den folgenden Schritt:
(i) Aneinandersetzen von Endabschnitten erster und zweiter Elemente (30, 40) entlang einer Schweißlinie, an der die Höhenpositionen der zwei benachbarten Oberflächen der jeweiligen Endabschnitte der zwei Elemente verschieden sind;
**gekennzeichnet durch** die folgenden Schritte:
(ii) Ausführen von Paddingschweißen an der unteren Oberfläche der aneinandergesetzten Elementoberflächen, um die Höhe des Elements mit der niedrigeren Oberfläche zur Höhenposition der anderen Oberfläche hin anzuheben; und
(iii) Durchführen von Reibrührschweißen der aneinandergesetzten Elemente an der Schweißlinie von der Seite der zwei Oberflächen aus, an der das Paddingschweißen ausgeführt wurde.

2. Reibrührschweißverfahren nach Anspruch 1, wobei das Paddingschweißen an in Abständen zueinander angeordneten Stellen entlang der Richtung des Reibrührschweißens ausgeführt wird.

3. Reibrührschweißverfahren nach Anspruch 1 oder 2, wobei der Schritt (i) des Aneinandersetzens zwischen dem Endabschnitt des ersten Elements (30) mit einer ersten Dicke und einem Endabschnitt des zweiten Elements (40), dessen Endabschnitt dünner als die erste Dicke ist, stattfindet und wobei das Reibrührschweißen an den aneinandergesetzten Endabschnitten von der Seite aus durchgeführt wird, an der das Paddingschweißen durchgeführt wurde.

4. Reibrührschweißverfahren nach Anspruch 3, wobei beide Elemente (30, 40) extrudierte Elemente sind und die Extrusionsrichtung des ersten Elements senkrecht zu der des zweiten Elements in ihrer geschweißten Position ist.

5. Reibrührschweißverfahren nach Anspruch 1, ausgeführt in einem Verfahren zur Herstellung einer Seitenstruktur (20), einer Karosserie, wobei
das erste und das zweite Element in Schritt (i) zwei Unteranordnungen extrudierter Elemente (30, 40) sind, die mittels eines Schrittes (a) von Reibrührschweißen mehrere der jeweiligen extrudierten Elemente hergestellt sind;
das Aneinandersetzen in Schritt (i) zwischen Schweißabschnitten der zwei Unteranordnungen stattfindet, so daß die jeweiligen Extrusionsrichtungen der extrudierten Elemente der zwei Unteranordnungen im wesentlichen orthogonal zueinander sind, wobei eine erste der Unteranordnungen einen erhabenen Abschnitt (32) entlang ihres Schweißabschnitts an einer Seitenkante des ersten extrudierten Elements (30) aufweist;
das Paddingschweißen in Schritt (ii) auf dem Schweißabschnitt der zweiten Unteranordnung vor oder nach dem Aneinandersetzen ausgeführt wird; und
das Reibrührschweißen in Schritt (iii) die Unteranordnungen von der Seite aus verbindet, an der das Paddingschweißen durchgeführt wurde.

6. Reibrührschweißverfahren nach Anspruch 5, wobei das Paddingschweißen mittels TIG-Schweißens ausgeführt wird, wobei als Füllmaterial das gleiche Material wie das Material zumindest einer der Unteranordnungen an ihrem Schweißabschnitt verwendet wird.

7. Reibrührschweißverfahren nach Anspruch 1, ausgeführt in einem Verfahren zur Herstellung einer Seitenstruktur (20) einer Karosserie, wobei
das erste Element in Schritt (i) eine Unteranordnung extrudierter Elemente (80) ist, die mittels Reibrührschweißen mehrerer extrudierter Elemente (80) erzeugt wurden, und wobei das zweite Element eine Rahmenstruktur (90) ist, die ein Rahmen einer Eingangs-/Ausgangsöffnung oder ein Rahmen eines Fensters ist, wobei der Kantenabschnitt der Rahmenstruktur einen erhabenen Abschnitt (92) entlang ihres Kantenabschnitts aufweist;
das Aneinandersetzen in Schritt (i) zwischen den Kantenabschnitten jeweils der Unteranordnung und der Rahmenstruktur (90) stattfindet;
das Paddingschweißen in Schritt (ii) an der Unteranordnung entlang ihres Kantenabschnitts vor oder nach dem Aneinandersetzen ausgeführt wird; und
das Reibrührschweißen in Schritt (iii) die Unteranordnung und die Rahmenstruktur (90) von der Seite aus verbindet, an der das Paddingschweißen durchgeführt wurde.

8. Reibrührschweißverfahren nach Anspruch 6, wobei der erhabene Abschnitt auf der Innenseite der Karosserie liegt und das Paddingschweißen und das Reibrührschweißen aus zumindest einem der Schritte (iii) und (a) von der Innenseite der Karosserie aus ausgeführt wird.

9. Reibrührschweißverfahren nach Anspruch 1, wobei das erste Element ein extrudiertes hohles Rahmenelement (80) und das zweite Element ein extrudiertes Rahmenelement (90) ist, wobei das Verfahren einen zusätzlichen Schritt (0) aufweist, der vor Schritt (i) ausgeführt wird und in dem eine Querrippe teilweise entfernt wird, die zwischen einander gegenüberliegenden Platten (81, 82) an einem Endabschnitt in der Extrusionsrichtung des extrudierten hohlen Rahmenelements (80) verläuft, wobei
das Aneinandersetzen in Schritt (i) zwischen dem extrudierten Rahmenelement (90) und dem Endabschnitt des extrudierten hohlen Rahmenelements (80) stattfindet, wobei die jeweiligen Extrusionsrichtungen des extrudierten hohlen Rahmenelements (80) und des extrudierten Rahmenelements (90) orthogonal sind und das extrudierte Rahmenelement (90) zwischen den einander gegenüberliegenden Platten (81, 82) eingefügt wird, und
das Reibrührschweißen in Schritt (iii) am aneinandergesetzten Abschnitt des extrudierten Rahmenelements (90) von außerhalb des extrudierten Rahmenelements (90) aus ausgeführt wird.

10. Reibrührschweißverfahren nach Anspruch 9, wobei
ein Endabschnitt des aneinandergesetzten Abschnitts des extrudierten Rahmenelements (90) einen erhabenen Abschnitt (92) aufweist, der nach außen aus der Dicke des extrudierten Rahmenelements (90) herausragt, und
das Reibrührschweißen in Schritt (iii) am aneinandergesetzten Abschnitt einschließlich des erhabenen Abschnitts (92) ausgeführt wird.

11. Reibrührschweißverfahren nach Anspruch 1, wobei das erste Element ein extrudiertes hohles Rahmenelement (80) und das zweite Rahmenelement ein extrudiertes Rahmenelement (100) ist, wobei das Verfahren den Schritt (0) umfaßt, in dem eine Querrippe (83) teilweise entfernt wird, die zwischen einander gegenüberliegenden Platten (81, 82) an einem Endabschnitt in der Extrusionsrichtung des extrudierten hohlen Rahmenelements (80) verläuft, und in dem ein Endabschnitt einer ersten der Platten (82) entfernt wird; wobei
der Schritt (i) des Aneinandersetzens zwischen dem zweiten Element (100) und dem Endabschnitt des ersten Elements (80) stattfindet und die folgenden Zwischenschritte enthält:
(i.a) Überlappen und Aneinandersetzen eines Endabschnitts der zweiten Platte (81) des ersten Elements an das zweite Element; und
(i.b) Überlappen und Aneinandersetzen der ersten Platte (82) an das zweite Element (100),
wobei die Extrusionsrichtungen des ersten und des zweiten Elements (80, 100) im wesentlichen orthogonal zueinander sind;
wobei die aneinanderliegenden Oberflächen eine Außenfläche der zweiten Platte (81) des ersten Elements und eine Außenfläche des zweiten Elements (100) sind und
wobei das Reibrührschweißen in Schritt (iii) an dem Abschnitt des zweiten Elements (100), der an die zweite Platte (81) des ersten Elements (80) anstößt, von außerhalb des ersten Elements (80) aus durchgeführt wird.

12. Reibrührschweißverfahren nach Anspruch 11, wobei
ein Endabschnitt des Abschnitts des zweiten Elements (100), der an die zweite Platte (81) des ersten Elements (80) anstößt, einen erhabenen Abschnitt (102) ausweist, der nach außen hin herausragt, und
das Reibrührschweißen in Schritt (iii) an dem Abschnitt des zweiten Elements, der an die zweite Platte (81) des ersten Elements (80) anstößt, einschließlich des erhabenen Abschnitts (102) ausgeführt wird.

13. Struktur, bei der:
ein Endabschnitt eines ersten Elements (30) und ein Endabschnitt eines zweiten Elements (40), die so aneinander gesetzt sind, daß die Höhenpositionen der zwei benachbarten Oberflächen der jeweiligen Endabschnitte der zwei Elemente verschieden sind, miteinander mittels Reibrührschweißens entlang einer Schweißlinie verbunden sind;
an der Schweißlinie ein Schweißabschnitt in der Dickenrichtung der Elemente (30, 40) hervorragt und ein mittlerer Abschnitt in der Breitenrichtung des Schweißabschnitts zurückgesetzt ist;
**gekennzeichnet dadurch, daß**
der hervorragende Schweißabschnitt Material des ersten Elements (30) und Paddingschweißmaterial, das mittels Paddingschweißens an die erste Oberfläche des zweiten Elements geschweißt ist, umfaßt, wodurch die Oberfläche des zweiten Elements (40) angehoben ist, um Reibrührschweißen entlang der Schweißlinie zu ermöglichen.

14. Struktur nach Anspruch 13, wobei
das erste Element (30) und das zweite Element.(40) extrudierte Rahmenelemente sind und
der Endabschnitt des zweiten Elements (40) ein Endabschnitt in der Extrusionsrichtung des zweiten Elements (40) ist.

15. Karosserie mit einer Struktur nach Anspruch 13, wobei das erste Element (30) ein erstes extrudiertes Element ist und das zweite Element (40) ein zweites extrudiertes Element ist, wobei die Extrusionsrichtungen des ersten und des zweiten extrudierten Elements (30, 40) im wesentlichen orthogonal zueinander sind und wobei der hervorragende Schweißabschnitt an der Innenseite der Karosserie ist.

16. Karosserie nach Anspruch 15, wobei
das erste und das zweite extrudierte Element jeweils mehrere extrudierte Körper aufweisen, die mit gleichgerichteten Extrusionsrichtungen aneinander geschweißt sind; und
sich das erste und das zweite extrudierte Element in einer Seitenstruktur einer Karosserie befinden.

17. Karosserie nach Anspruch 16, wobei
das erste Element ein Rahmen (90) einer Eingangs-/Ausgangsöffnung oder ein Rahmen eines Fensters ist.

## Revendications

1. Procédé de soudage par friction-malaxage comportant l'étape consistant à :
(i) mettre en butée des parties d'extrémité d'un premier et d'un second élément (30, 40) le long d'une ligne de soudure sur laquelle les positions en hauteur de deux surfaces adjacentes des parties d'extrémité respectives des deux éléments sont différentes ;
**caractérisé par** les étapes consistant à :
(ii) effectuer un soudage de surépaisseur sur la surface plus basse parmi les surfaces d'éléments en butée afin de monter la hauteur de l'élément ayant la surface plus basse en direction de la position en hauteur de l'autre surface ; et
(iii) effectuer un soudage par friction-malaxage des éléments en butée sur la ligne de soudage à partir du côté des deux surfaces sur lesquelles le soudage en surépaisseur a été effectué.

2. Procédé de soudage par friction-malaxage selon la revendication 1, dans lequel le soudage en surépaisseur est effectué au niveau d'emplacements espacés le long de la direction du soudage par friction-malaxage.

3. Procédé de soudage par friction-malaxage selon la revendication 1 ou 2, dans lequel l'étape (i) de mise en butée est effectuée entre la partie d'extrémité du premier élément (30) ayant une première épaisseur et une partie d'extrémité du second élément (40), dont la partie d'extrémité est plus mince que ladite première épaisseur, et dans lequel ledit soudage par friction-malaxage est effectué sur lesdites parties d'extrémité mises en butée à partir du côté où ledit soudage en surépaisseur a été effectué.

4. Procédé de soudage par friction-malaxage selon la revendication 3, dans lequel les deux dits éléments (30, 40) sont des éléments extrudés, et dans leur position soudée la direction d'extrusion du premier élément est perpendiculaire à celle du second élément.

5. Procédé de soudage par friction-malaxage selon la revendication 1, effectué dans un procédé de fabrication d'une structure latérale (20) d'une carrosserie de véhicule, dans lequel
à l'étape (i) lesdits premier et second éléments sont deux sous-ensembles d'éléments extrudés (30, 40) produits par une étape (a) de soudage par friction-malaxage d'une pluralité des éléments extrudés dans chaque cas,
à l'étape (i) ladite mise en butée est effectuée entre des parties de soudage desdits deux-ensembles de telle sorte que les directions d'extrusion respectives des éléments extrudés des deux sous-ensembles sont sensiblement orthogonales, un premier des sous-ensembles ayant une partie surélevée (32) le long de sa dite partie de soudage à un bord latéral dudit premier élément extrudé (30),
ledit soudage de surépaisseur de l'étape (ii) est effectué, avant ou après ladite mise en butée, sur la partie de soudage du second sous-ensemble, et
ledit soudage par frottement et malaxage de l'étape (iii) relie lesdits sous-ensembles à partir du côté où ledit soudage de surépaisseur a été effectué.

6. Procédé de soudage par friction-malaxage selon la revendication 5, dans lequel ledit soudage de surépaisseur est effectué par un soudage TIG utilisant en tant que matériau de remplissage le même matériau que le matériau d'au moins un sous-ensemble dans la partie de soudage de celui-ci.

7. Procédé de soudage par friction-malaxage selon la revendication 1, effectué dans un procédé de fabrication d'une structure latérale (20) d'une carrosserie de véhicule, dans lequel
à l'étape (i) ledit premier élément est un sous-ensemble d'éléments extrudés (80) produits par soudage par friction-malaxage d'une pluralité d'éléments extrudés (80), et ledit second élément est une structure de châssis (90), qui est un châssis d'une ouverture d'entréé/sortie ou un châssis de fenêtre, la partie de bord de ladite structure de châssis ayant une partie surélevée (92) le long de ladite partie de bord de celle-ci ;
à l'étape (i) ladite mise en butée est effectuée entre des parties de bord respectivement dudit sous-ensemble et de ladite structure de châssis (90) ;
ledit soudage de surépaisseur de l'étape (ii) est effectué, avant ou après ladite mise en butée, sur ledit sous-ensemble le long de ladite partie de bord de celui-ci ; et
ledit soudage par friction-malaxage de l'étape (iii) relie ledit sous-ensemble et ladite structure de châssis (90) à partir du côté où ledit soudage de surépaisseur a été effectué.

8. Procédé de soudage par friction-malaxage selon la revendication 6, dans lequel ladite partie surélevée est située sur le côté intérieur de la carrosserie de véhicule et ledit soudage de surépaisseur et ledit soudage par friction-malaxage d'au moins une des étapes (iii) et (a) sont effectués à partir du côté intérieur de ladite carrosserie de véhicule.

9. Procédé de soudage par friction-malaxage selon la revendication 1, dans lequel ledit premier élément est un élément de châssis creux extrudé (80), et ledit second élément est un élément de châssis extrudé (90), le procédé comportant une étape supplémentaire (0), effectuée avant l'étape (i) consistant à enlever partiellement une nervure transversale (83) s'étendant entre des plaques opposées (81, 82) à une partie d'extrémité dans la direction d'extrusion de l'élément de châssis creux extrudé (80), dans lequel
à l'étape (i) ladite mise en butée est effectuée entre ledit élément de châssis extrudé (90) et ladite partie d'extrémité dudit élément de châssis creux extrudé (80), les directions d'extrusion respectives dudit élément de châssis creux extrudé (80) et dudit élément de châssis extrudé (90) étant orthogonales et ledit élément de châssis extrudé (90) étant inséré entre lesdites plaques opposées (81, 82), et
ledit soudage par friction-malaxage de l'étape (iii) est effectué sur la partie mise en butée dudit élément de châssis extrudé (90) à partir de l'extérieur dudit élément de châssis extrudé (90).

10. Procédé de soudage par friction-malaxage selon la revendication 9, dans lequel
une partie d'extrémité de ladite partie mise en butée dudit élément de châssis extrudé (90) a une partie surélevée (92) qui fait saillie vers l'extérieur à partir de l'épaisseur dudit élément de châssis extrudé (90), et
ledit soudage par friction-malaxage de l'étape (iii) est effectué sur ladite partie mise en butée incluant ladite partie surélevée (92).

11. Procédé de soudage par friction-malaxage selon la revendication 1, dans lequel ledit premier élément est un élément de châssis creux extrudé (80) et ledit second élément est un élément de châssis extrudé (100), le procédé comportant l'étape (0) consistant à enlever partiellement une nervure transversale (83) s'étendant entre des plaques opposées (81, 82) à une partie d'extrémité dans la direction d'extrusion de l'élément de châssis creux extrudé (80) et enlever une partie d'extrémité d'une première desdites plaques (82) ; dans lequel
ladite étape (i) de mise en butée est effectuée entre ledit second élément (100) et ladite partie d'extrémité dudit premier élément (80) et comporte les étapes intermédiaires consistant à :
(i.a) recouvrir et mettre en butée une partie d'extrémité de la seconde plaque (81) dudit premier élément sur ledit second élément ; et
(i.b) recouvrir et mettre en butée ladite première plaque (82) sur ledit second élément (100),
les directions d'extrusion desdits premier et second éléments (80, 100) étant sensiblement orthogonales ;
lesdites surfaces adjacentes sont une face extérieure de la seconde plaque (81) du premier élément et une face extérieure du second élément (100), et
ledit soudage par friction-malaxage de l'étape (iii) est effectué sur la partie dudit second élément (100) venant en butée avec ladite seconde plaque (81) dudit premier élément (80) à partir de l'extérieur dudit premier élément (80).

12. Procédé de soudage par friction-malaxage selon la revendication 11, dans lequel
une partie d'extrémité de ladite partie dudit second élément (100) venant en butée avec ladite seconde plaque (81) dudit premier élément (80) a une partie surélevée (102) qui fait saillie vers l'extérieur, et
ledit soudage par friction-malaxage de l'étape (iii) est effectué sur ladite partie dudit second élément (100) venant en butée avec ladite seconde plaque (81) dudit premier élément (80), incluant ladite partie surélevée (102).

13. Structure dans laquelle :
une partie d'extrémité d'un premier élément (30) et une partie d'extrémité d'un second élément (40), qui sont mises en butée ensemble de sorte que les positions en hauteur des deux surfaces adjacentes des parties d'extrémité respectives des deux éléments soient différentes, sont reliées par un soudage par friction-malaxage le long d'une ligne de soudage ;
sur la ligne de soudage, une partie de soudage fait saillie dans la direction de l'épaisseur des éléments (30, 40) et une partie centrale dans la direction de la largeur de ladite partie de soudage est en creux ;
**caractérisée en ce que**
ladite partie de soudage en saillie comporte du matériau dudit premier élément (30) et un matériau de soudage de surépaisseur qui a été soudé en surépaisseur sur la première surface du second élément de manière à surélever la surface dudit second élément (40) pour permettre un soudage par friction-malaxage le long de la ligne de soudage.

14. Structure selon la revendication 13, dans laquelle
ledit premier élément (30) et ledit second élément (40) sont des éléments de châssis extrudés ; et
ladite partie d'extrémité dudit second élément (40) est une partie d'extrémité dans la direction d'extrusion du second élément (40).

15. Carrosserie de véhicule ayant une structure selon la revendication 13, dans laquelle le premier élément (30) est un premier élément extrudé et le second élément (40) est un second élément extrudé, les directions d'extrusion des premier et second éléments extrudés (30, 40) étant sensiblement orthogonales, et ladite partie de soudage en saillie est du côté intérieur de la carrosserie de véhicule.

16. Carrosserie de véhicule selon la revendication 15, dans laquelle
chacun desdits premier et second éléments extrudés comporte une pluralité de corps extrudés soudés ensemble en ayant leurs directions d'extrusion alignées ; et
lesdits premier et second éléments extrudés sont dans une structure de côté de ladite carrosserie de véhicule.

17. Carrosserie de véhicule selon la revendication 16, dans laquelle
ledit premier élément est un châssis (90) d'une ouverture d'entrée/sortie ou un châssis de fenêtre.
